(19) Europäisches Patentamt
European Patent Office
Office européen des brevets

(11) **EP 2 412 105 B1**

(12) **EUROPEAN PATENT SPECIFICATION**

(45) Date of publication and mention
of the grant of the patent:
**03.10.2018 Bulletin 2018/40**

(51) Int Cl.:
***H04B 1/707*** *(2011.01)*      ***H04L 25/03*** *(2006.01)*

(21) Application number: **10716039.2**

(22) Date of filing: **22.03.2010**

(86) International application number:
**PCT/IB2010/000643**

(87) International publication number:
**WO 2010/109296 (30.09.2010 Gazette 2010/39)**

(54) **SIGNAL RECEPTION WITH ADJUSTABLE PROCESSING DELAY PLACEMENT**

SIGNALEMPFANG MIT VERSTELLBARER PLATZIERUNG DER VERARBEITUNGSVERZÖGERUNG

RECEPTION DE SIGNAL AVEC PLACEMENT REGLABLE DE DELAIS DE TRAITEMENT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.03.2009 US 408939**

(43) Date of publication of application:
**01.02.2012 Bulletin 2012/05**

(73) Proprietor: **Telefonaktiebolaget LM Ericsson (publ)**
**164 83 Stockholm (SE)**

(72) Inventors:
• **CAIRNS, Douglas, A.**
**Durham**
**NC 27705 (US)**
• **UESAKA, Kazuyoshi**
**Kawasaki 215-0031 (JP)**
• **JONSSON, Elias**
**S-211 29 Malmö (SE)**

(74) Representative: **Zacco Sweden AB**
**P.O. Box 5581**
**114 85 Stockholm (SE)**

(56) References cited:
**US-A1- 2006 029 164**

**Description**

**TECHNICAL FIELD**

The present invention relates generally to implementing a receiving device that is capable of receiving composite signals, and more specifically by way of example but not limitation, to adjusting a grid having temporal points that are used to place processing delays for receiving a composite signal.

**BACKGROUND**

Many specialized terms and abbreviations are used in the communications arts. At least some of the following are referred to within the text that follows, such as in this background and/or the subsequent description sections. Thus, the following terms and abbreviations are herewith defined:

BER Bit Error Rate
BLER Block Error Rate
COG Center of Gravity
MS Mobile Station
PDP Power Delay Profile
RBS Radio Base Station
RMS Root-Mean-Square
SINR Signal-to-Interference-plus-Noise Ratio
WCDMA Wideband Code Division Multiple Access

Electronic communication forms the backbone of today's information-oriented society. Electronic communications are transmitted over wireless or wired channels using electromagnetic radiation, such as radio frequency (RF) transmissions, light waves, and so forth. The availability and capacity of electronic communications is frequently limited by the interference and noise inherent in the communications channel between a transmitting device and a receiving device.

The utilization of a communications channel may be increased by adopting any of a number of different schemes. These schemes can enable more information to be communicated in a given spectrum allocation. Efficient utilization of spectrum can reduce the cost of communication services being provided, can enable richer communication services to be provided, or both. Such schemes can also strengthen or otherwise improve signal reception at a receiving device.

An example scheme involves receiving a composite signal that includes multiple signal images. The multiple signal images are combined or otherwise processed in a manner that increases the likelihood of correctly interpreting the transmitted information. In a spread spectrum system, the signal images may be combined before or after the received signal has been despread. The signal images are combined at the chip level if the combining is performed prior to despreading. They are combined at the symbol level if the combining is performed after the despreading. A Rake receiver, for example, can collect signal energy from different signal images using "fingers" to strengthen reception and demodulation of the actual information carried by the composite signal.

Generally, signal images may be combined using an interference suppression scheme. With regard to Wideband Code Division Multiple Access (WCDMA), for example, linear interference suppression has been standardized for both type 2 (single antenna) and type 3 (two antenna) receivers. Linear interference suppression can be achieved by either chip level or symbol level equalization. A problem with such equalizers involves deciding how to place filter taps (e.g., at the chip level) or fingers (e.g., at the symbol level) in order to maximize the received symbol Signal-to-Interference-plus-Noise Ratio (SINR).

In this Background section, the description focuses on finger placement for symbol level equalization in order to illustrate the problem. However, the filter tap placement problem for chip level equalizers is analogous. With symbol level equalization, a finger typically includes a delay element and a correlator. The delay element delays the received signal by a given amount before the correlator despreads the signal by correlating it with the combined spreading/scrambling code. The term "placing a finger" therefore refers to setting a respective finger delay period for a respective finger delay element.

Several approaches have been proposed for finger placement. Generally, these proposed approaches can be categorized as path-oriented or grid-oriented. Path-oriented approaches are described immediately below. Grid-oriented approaches are described thereafter.

Path-Oriented Approaches: With path-oriented approaches, the receiver relies on information developed by the path searcher/delay estimator. Generally, some form of a mirroring strategy is employed. A common and widely used variant of the mirroring strategy is described in U.S. Patent No. 6,922,434. U.S. Patent No. 6,922,434 to Y.-P.

Wang et al. is entitled "Apparatus and methods for finger delay selection in RAKE receivers" and was issued on 26 July 2005 to the same Assignee, Telefonaktiebolaget LM Ericsson, as the Instant Patent Application.

An example of this mirroring strategy includes two phases. In a first phase, the set of finger delays is set to the channel delays. If the receiver is a Rake receiver, the process may be terminated after the first phase. Otherwise, in a second phase, the set of channel delays is ranked in decreasing order of channel coefficient magnitude. The ranked channel delay set is then considered in a pair-wise fashion to create candidate finger delays.

For each pair of channel delays from the channel delay set that is ranked in decreasing order of channel coefficient magnitude, the following steps are performed:

1. Determine delay difference: $\Delta\tau = \tau_i - \tau_j$ ;
2. Construct first candidate delay as: $\tau_{cad}(1) = \tau_i + \Delta\tau$;
3. Construct second candidate delay as: $\tau_{cand}(2) = \tau_j - \Delta\tau$;
4. Add candidate delays to the finger delay set; and
5. Repeat steps 1-4 for each of the combinations of $i$ and $j$ or until the number of finger delays matches the number of available receiver fingers.

Grid-Oriented Approaches: With grid-oriented approaches, finger assignment is contemplated at regularly spaced intervals (e.g., from a grid). An example of a grid-oriented approach is described in U.S. Patent No. 7,469,024. U.S. Patent No. 7,469,024 to A. Khayrallah et al. is entitled "Method and apparatus for finger placement in Rake receiver" and was issued on 23 December 2008 to the same Assignee, Telefonaktiebolaget LM Ericsson, as the Instant Patent Application.

Grid points of the grid define potential finger locations, with the grid being of essentially infinite extent. The actual finger assignment is based on information such as the Power Delay Profile (PDP), the maximum number of fingers to place, thresholding level(s), assigned finger quality, and so forth. An applicable assumption is that one can identify regions of energy from the PDP and that covering these regions with sub-Nyquist-spaced fingers allows for accurate demodulation.

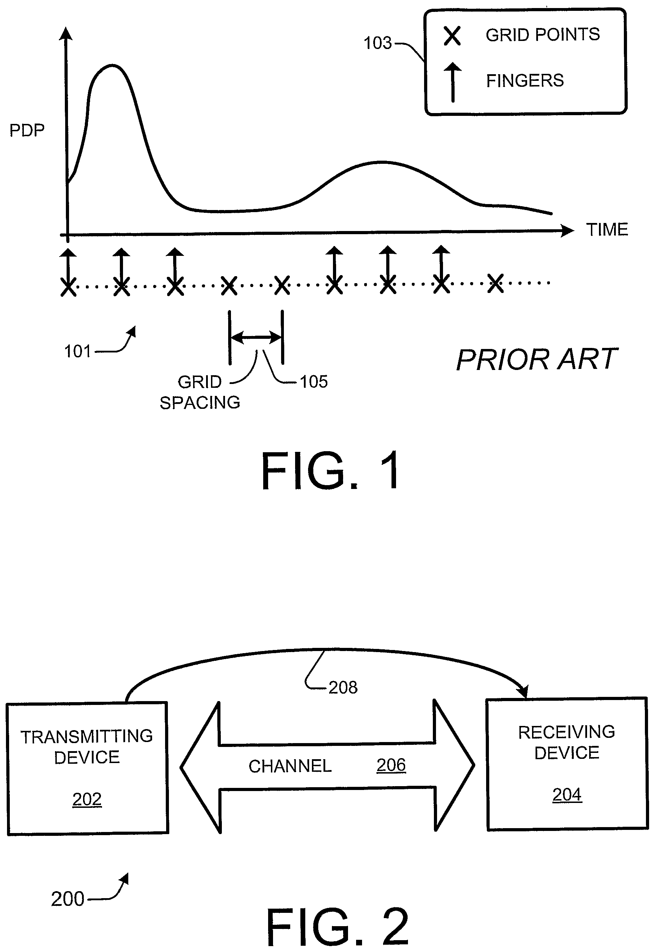

FIG. 1 depicts an example of grid-oriented finger assignment in accordance with a conventional approach. As illustrated, a grid 101 includes multiple grid points. As indicated by legend 103, each grid point is represented by an "X", and each finger is represented by an upward-pointing arrow with a small triangular tip. Grid 101 is overlaid on a graph having an abscissa axis (i.e., the horizontal x-axis) and an ordinate axis (i.e., the vertical y-axis). The abscissa axis represents time, and the ordinate axis represents the PDP.

Grid spacing 105 is defined as the distance (e.g., time) between two consecutive grid points. With grid 101, grid spacing 105 is fixed. As noted above, grid 101 may be of an essentially infinite size. Consequently, a finger is not assigned to each and every grid point. Instead, fingers are assigned selectively, such as to the grid points corresponding to times of relatively high PDP. With this grid-oriented approach, there are issues regarding how the grid is aligned, regarding grid spacing, and regarding whether there are one or multiple such grids operative at the same time. U.S. Patent No. 7,469,024 addresses many of these issues. US 2006/0029164 A1 discloses another background art solution having a grid-oriented approach.

Unfortunately, there are deficiencies in the foregoing state of the art for interference suppression with regard to both the path-oriented and the grid-oriented approaches. There are two significant limitations of the path-oriented approaches. First, a practical path searcher/delay estimator makes errors. These errors in the path estimation result in sub-optimal finger placement. The severity of this type of error depends, in part, on what type of G-Rake receiver is used. Misidentification of paths can be very serious for a parametric receiver. Such receivers depend upon a model of the channel, and any mismatch between the model and the true channel causes performance degradation. The error is less severe for a nonparametric G-Rake receiver. These receivers blindly learn channel characteristics, and are therefore less affected by misidentification of channel paths. However, the misidentification of paths may result in fewer (or more) fingers being placed than is required for interference suppression. The placement of fewer (or more) fingers may result in decreased receiver performance (e.g., reduced throughput and/or higher BER/BLER).

Another problem with the path-oriented approaches relates to the frequency of finger repositioning. Paths may appear to drift over time due to receiver imperfections (e.g., oscillator drift and/or frequency error). Paths may disappear/reappear as well. These path-related issues can lead to the frequent repositioning of fingers with no apparent performance gain. This can result in significant overhead in receiver software and/or hardware.

With regard to grid-oriented approaches generally, the basic concept is sound. Grid-oriented approaches can therefore serve as a foundation for additional development. However, the existing grid-oriented approaches are relatively static even in the face of changing environmental conditions. Consequently, there is a need to address the deficiencies that exist in the current state of the art with regard to both path-oriented and grid-oriented approaches. Such deficiencies and other needs are addressed by one or more of the various embodiments of the present invention.

## SUMMARY

It is an object of the present invention to remedy or at least ameliorate one or more of the deficiencies that are identified hereinabove. It is an object of certain embodiments of the present invention to dynamically adjust a grid having temporal points based on current channel conditions. It is another object of certain embodiments of the present invention to implement a grid-oriented approach using an interference suppression receiver.

The invention is defined by the claims.

In an example embodiment, a method entails receiving a composite signal with adjustable processing delay placements. A composite signal having multiple signal images corresponding to multiple reception delays is received. A root-mean-square (RMS) delay spread is ascertained for the multiple reception delays that correspond to

It is an object of the present invention to remedy or at least ameliorate one or more of the deficiencies that are identified hereinabove. It is an object of certain embodiments of the present invention to dynamically adjust a grid having temporal points based on current channel conditions. It is another object of certain embodiments of the present invention to implement a grid-oriented approach using an interference suppression receiver.

Accordingly, the present invention provides a method according to Claim 1.

Furthermore, the present invention provides a device according to Claim 7.

the multiple signal images of the composite signal. A set of temporal points is produced responsive to the RMS delay spread. Multiple processing delays are placed based on the set of temporal points. In different example implementations, the set of temporal points may be produced by adjusting the spacing between temporal points, by adjusting a total number of temporal points in the set of temporal points, or by changing the center location of the set of temporal points. The temporal point spacing and the number of temporal points may be adjusted responsive to the RMS delay spread. The center location of the set of temporal points may be adjusted responsive to at least one calculated delay.

In another example embodiment, a receiving device adjusts a set of temporal points to be used for placing processing delays for a receiver. The receiving device includes a receiver, a production unit, and a processing delay placement unit. The receiver receives a composite signal having multiple signal images corresponding to multiple reception delays. The production unit ascertains an RMS delay spread for the multiple reception delays corresponding to the multiple signal images of the composite signal. The production unit is to generate a set of temporal points responsive to the RMS delay spread. The processing delay placement unit places multiple processing delays based on the set of temporal points.

In yet another example embodiment, a method entails receiving a signal with adjustable processing delay placements. A composite signal having multiple signal images corresponding to multiple reception delays is received. A set of temporal points is produced by adjusting a spacing between consecutive temporal points of the set of temporal points and by adjusting a center location of the set of temporal points. Multiple processing delays are placed based on the set of temporal points. The composite signal is demodulated by combining the multiple signal images in accordance with the multiple processing delays that are placed based on the set of temporal points.

An advantage of certain embodiments of the present invention is that scarce processing delays may be adaptively utilized responsive to channel conditions by adjusting temporal points on which processing delays are placed. Another advantage of certain embodiments of the present invention is that receiver performance may be enhanced by adaptively allocating a number of processing delays based on whether a channel is relatively more dispersive or relatively less dispersive. Yet another advantage of certain embodiments of the present invention is that processing overhead can be reduced with respect to a path-oriented approach because less repositioning is involved. Additional advantages are noted herein below.

Additional embodiments are also described and/or claimed herein. Example additional embodiments include, by way of example but not limitation, arrangements, memory, systems, and so forth. Additional aspects of the invention are set forth in part in the detailed description, drawings, and claims that follow, and in part may be derived from the detailed description and drawings, or can be learned by practice of the invention. It is to be understood that both the foregoing general description and the following detailed description are exemplary and explanatory only and are not restrictive of the invention as disclosed or as claimed.

## BRIEF DESCRIPTION OF THE DRAWINGS

A more complete understanding of the present invention may be obtained by reference to the following detailed description when taken in conjunction with the accompanying drawings wherein:

FIG. 1 depicts an example of grid-oriented finger assignment in accordance with a conventional approach.
FIG. 2 is a block diagram of an example communications system including a transmitting device and a receiving device.
FIG. 3 is an example communications environment that illustrates both a receiving device having a receiver and a composite signal including multiple signal images.

FIG. 4A is a block diagram of an example receiver in which a processing delay placement unit is substantially separate from a searcher.

FIG. 4B is a block diagram of an example receiver in which a processing delay placement unit is substantially integrated with a searcher.

FIG. 5 depicts an example of processing delay placement using a grid-oriented approach in which the spacing between temporal points is adjusted.

FIG. 6 depicts an example of processing delay placement using a grid-oriented approach in which the number of temporal points in a set of temporal points is adjusted.

FIG. 7 depicts an example of processing delay placement using a grid-oriented approach in which the center of a set of temporal points is adjusted.

FIG. 8 is a block diagram of an example processing delay placement unit that includes a grid production unit and that provides placed processing delays.

FIG. 9 is a block diagram of an example grid production unit that produces a grid (set of temporal points) using a grid construction unit and/or a grid centering unit.

FIG. 10 is a block diagram of an example grid construction unit that operates responsive to a root-mean-square (RMS) delay spread.

FIG. 11 is a block diagram of an example grid centering unit that operates responsive to a calculated delay.

FIG. 12 is a flow diagram of an example general method for signal reception with adjustable processing delay placement.

FIG. 13 is a flow diagram of an example grid construction method for establishing the grid spacing between temporal points of a grid.

FIG. 14 is a flow diagram of an example grid construction method for setting the number of temporal points for a grid.

FIG. 15 is a block diagram of example devices that may be used to implement embodiments for adjusting a set of temporal points of a grid for the placement of processing delays when receiving a composite signal.

## DETAILED DESCRIPTION

As described herein above, there are drawbacks to the existing approaches for both path-oriented and grid-oriented finger assignment strategies. Because the general underlying concept for grid-oriented approaches is sound, however, example embodiments that are described herein are directed to grid-oriented approaches. In an example embodiment, a grid is dynamically adjusted responsive to current channel conditions. Grid-based approaches usually involve more fingers due to the typical sub-Nyquist grid spacing of the grid points. Grid points represent times along a temporal axis, and they are also termed temporal points herein. In an example implementation, the grid spacing can be adjusted so that it adapts to the channel, thereby effectively utilizing the finite number of processing delays that are available to a receiver. The current channel conditions can also determine how many processing delays are to be used by the receiver. In another example implementation, grid placement is extended in a manner that is appropriate for use when an interference suppression receiver is employed.

More specifically, example embodiments employ a grid-oriented approach for determining the placement of processing delays in which the grid is adjusted based on characteristics of the channel. Different characteristic metrics may be used to adjust the grid. Appropriate placement of the processing delays based on the grid can facilitate interference suppression. In an example embodiment, the width of the grid spacing between consecutive grid points is established responsive to the RMS delay spread. In another example embodiment, the number of processing delays to be employed is set responsive to the RMS delay spread. In yet another example embodiment, a location for the center of the grid is selected responsive to at least one calculated delay, such as (i) a delay corresponding to the center of gravity (COG) of multiple path delays or (ii) a path delay associated with the largest channel coefficient magnitude value or largest power delay profile (PDP).

FIG. 2 is a block diagram of an example communications system 200 including a transmitting device 202 and a receiving device 204. As illustrated, communications system 200 includes a channel 206 and a signal 208 in addition to transmitting device 202 and receiving device 204. In operation, transmitting device 202 transmits a signal 208 over channel 206 to receiving device 204. Receiving device 204 receives signal 208 from transmitting device 202 via channel 206.

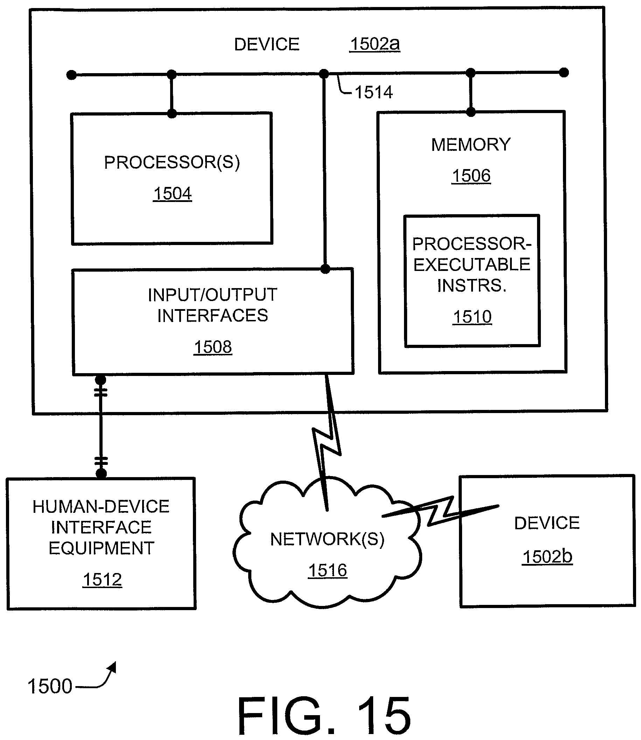

It should be understood that a single device may function as a transmitting device 202 at one moment and/or with respect to one communication and as a receiving device 204 at another moment and/or with respect to another communication. Examples of transmitting devices 202 and receiving devices 204 include, by way of example but not limitation, network communication nodes, remote terminals, and other devices that are capable of communicating over a channel 206. Network communication nodes may include, for example, a base transceiver station, a radio base station, a Node B, an access point, and so forth. Remote terminals may include, for example, a mobile terminal, a mobile station, a user equipment, a subscriber station, a communication card or module, and so forth. General example device implementations for transmitting/receiving devices 202/204 are described herein below with particular reference to FIG. 15.

In operation, channel 206 may be a wired channel or a wireless channel. Regardless, channel 206 affects the transmission, propagation, and/or reception of signal 208. When an interference suppression receiver is used at receiving device 204, the receiver can compensate for or otherwise accommodate the effects of channel conditions, including those caused by interference. One way to accommodate the effects of channel conditions is to combine different signal images of a composite signal.

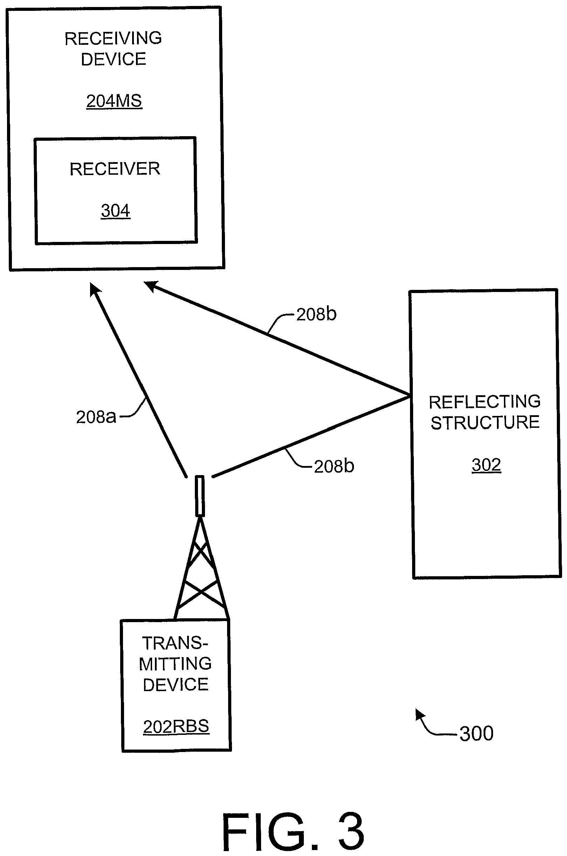

FIG. 3 is an example communications environment 300 that illustrates a receiving device 204MS having a receiver 304 and a composite signal 208 including multiple signal images 208a,208b. As illustrated, communications environment 300 also involves a transmitting device 202RBS and a reflecting structure 302. With example communications environment 300, transmitting device 202 is realized as a radio base station (RBS) transmitting device 202RBS. Receiving device 204 is realized as a mobile station (MS) receiving device 204MS.

However, this is merely one example implementation for a WCDMA-based embodiment. Alternatively, the transmitting device may be a remote terminal of any general type, and the receiving device may be a part of the infrastructure of a general wireless network. Also, transmitting devices 202 and/or receiving devices 204 may be devices that operate outside of cellular-type wireless networks or even those that operate within a wired network. Moreover, transmitting devices 202 and receiving devices 204 may operate in accordance with a different network standard.

In an example embodiment, transmitting device 202RBS transmits composite signal 208 (not separately shown in FIG. 3) to receiving device 204MS. Composite signal 208 propagates over a channel along two different signal paths that result in two different signal images 208a and 208b arriving at receiving device 204MS. Signal image 208a follows a direct path between transmitting device 202RBS and receiving device 204MS. Signal image 208b follows an indirect path that reflects off of reflecting structure 302 before reaching receiving device 204MS. Thus, composite signal 208 follows multiple paths from transmitting device 202RBS to receiving device 204MS. This causes different respective signal images 208a,208b to arrive at receiving device 204MS with different reception delays. In this instance, signal image 208b arrives at receiving device 204MS after signal image 208a due to the delay caused by the reflected path.

Hence, receiving device 204MS receives signals via a dispersive, multipath channel. The level or amount of dispersion may be different for different channels and may change over time. Such a dispersive, multipath channel results in different versions of the same communicated signal being received, including at different times. Receiving device 204MS is responsible for combining signal images 208a and 208b to attempt to reconstruct composite signal 208. From composite signal 208, receiving device 204MS may recover the communicated information.

An example mechanism for collecting signal energy from multiple signal images 208a,208b is a G-Rake receiver. Signal images 208a and 208b are despread and combined in accordance with determined combining weights using the G-Rake receiver. With a G-Rake receiver that is operating in conjunction with an interference suppression technique, the determined combining weights may also counteract the effects of interference by assigning processing delays to grid points of a grid.

It should be noted that communications environment 300 represents a relatively simple example. For instance, there may be more than two signal images 208a and 208b received at receiving device 204MS. Also, each signal image may be impacted by the same or different environmental effects such as reflecting structures and/or other signal impairments. Other factors may also impact the signal during transmission, propagation, and/or reception.

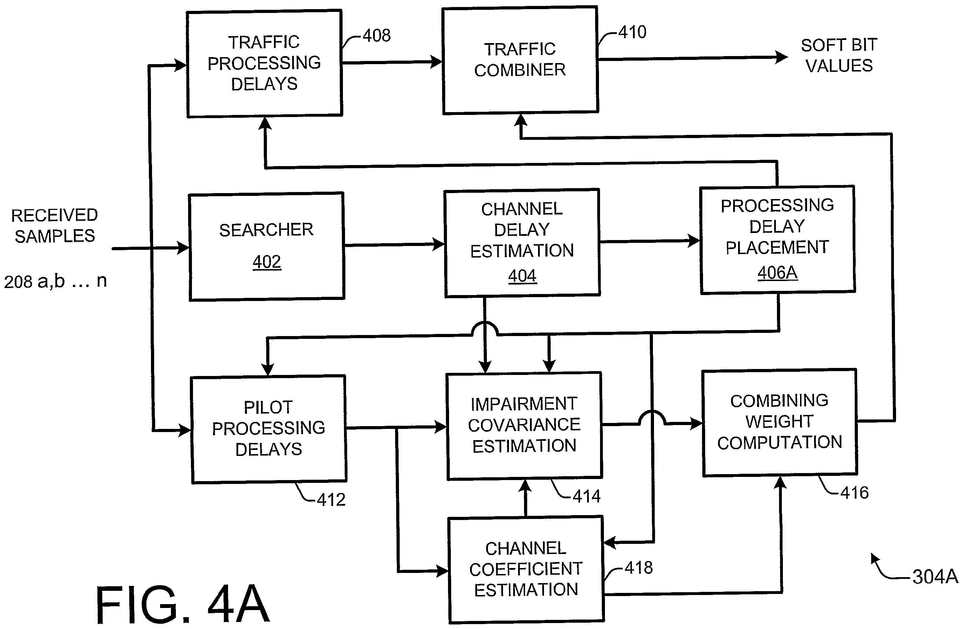

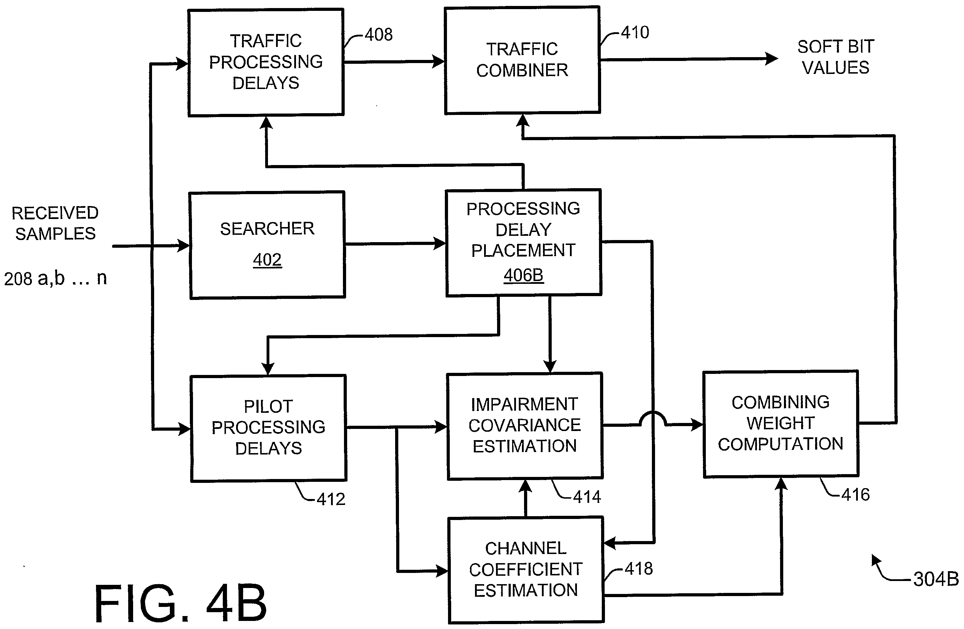

Example principles that are described herein for grid-oriented processing delay placement are applicable to symbol level equalization, chip level equalization, combinations thereof, and so forth. For symbol level equalization, placing a processing delay is comparable to placing/locating a finger element. For chip level equalization, placing a processing delay is comparable to placing/positioning a filter tap position. However, by way of example only, the equalizers that are described herein below with particular reference to FIGS. 4A and 4B focus on symbol level equalization without loss of generality. Thus, such equalizers may be realized in conjunction with a G-Rake receiver mechanism.

FIG. 4A and FIG. 4B illustrate a receiver 304A and a receiver 304B, respectively. Receiver 304A has a processing delay placement unit 406A that is substantially separate from a searcher 402. In contrast, receiver 304B has a processing delay placement unit 406B that is substantially integrated with a searcher 402. It is noted that use of the term "grid" herein below refers generally to a contiguous grid having grid or temporal points with no gaps. Nevertheless, the example principles that are described herein are likewise applicable to non-contiguous grids having grid or temporal points for the selective assignment of processing delays.

FIG. 4A is a block diagram of an example receiver 304A in which a processing delay placement unit 406A is substantially separate from a searcher 402. Receiver 304A accepts as input received samples 208a,b...n, with "n" being some integer. As illustrated, receiver 304A includes searcher 402, a channel delay estimation unit 404, and processing delay placement unit 406A. Receiver 304A further includes a traffic processing delays unit 408, a traffic combiner 410, a pilot processing delays unit 412, an impairment covariance estimation unit 414, a combining weight computation unit 416, and a channel coefficient estimation unit 418.

These units may be interconnected with a given logic flow as shown in FIG. 4A (and FIG. 4B). Received samples 208a,b...n are provided to traffic processing delays unit 408, searcher 402, and pilot processing delays unit 412. Traffic combiner 410 accepts input from traffic processing delays 408 and combining weight computation unit 416. Traffic combiner 410 outputs soft bit values that represent information that has been recovered from the received composite signal.

The following parts of receiver 304A may generally function in a substantially conventional fashion: traffic processing delays unit 408, traffic combiner 410, pilot processing delays unit 412, impairment covariance estimation unit 414, combining weight computation unit 416, and channel coefficient estimation unit 418. Accordingly, operational details of these parts are not described herein.

Instead, the description focuses on searcher 402, channel delay estimation unit 404, and processing delay placement unit 406A. It is given that processing delay placement unit 406A has access to both estimated channel delays (as shown from channel delay estimation unit 404) as well as estimated channel coefficients (not explicitly shown from channel coefficient estimation unit 418).

For example embodiments, processing delay placement unit 406A is adapted to produce a grid to be used for placing processing delays. One or more parameters of the grid may be dynamically adjusted responsive to current channel conditions. For example, the spacing between consecutive temporal points may be adjusted, and a center location of the grid may be adjusted. Also, a number of temporal points for the grid may be adjusted. These adjustments may be made responsive to an RMS delay spread and/or at least one calculated delay. With processing delay placement unit 406A, the RMS delay spread is calculated using estimated net channel coefficients.

FIG. 4B is a block diagram of an example receiver 304B in which a processing delay placement unit 406B is substantially integrated with a searcher 402. As compared to receiver 304A (of FIG. 4A), receiver 304B omits a separate channel delay estimation unit 404. Processing delay placement unit 406B is more closely integrated with searcher 402. Moreover, searcher 402 and processing delay placement unit 406B may be implemented as a single entity, although they are shown as being separate in FIG. 4B for the sake of clarity.

For example embodiments, processing delay placement unit 406B is adapted to produce a grid to be used for the placement of processing delays. One or more parameters of the grid may be adjusted responsive to current channel conditions. For example, the spacing between consecutive temporal points and a number of temporal points for the grid may be adjusted. Also, a center location of the grid may be adjusted. These adjustments may be made responsive to an RMS delay spread and/or at least one calculated delay. In contrast with processing delay placement unit 406A (of FIG. 4A), processing delay placement unit 406B calculates the RMS delay spread using PDPs.

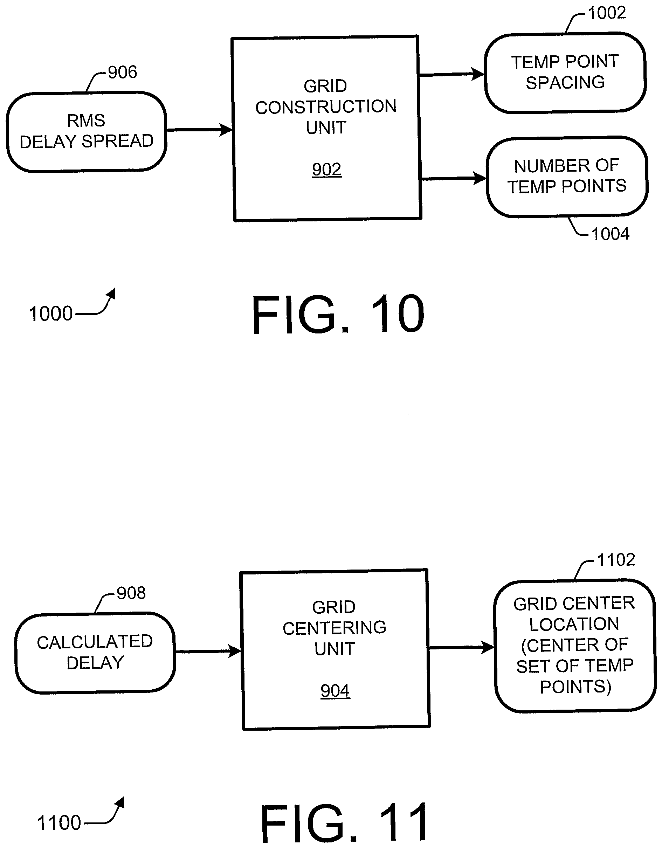

Thus, processing delay placement unit 406B operates at least partially differently from processing delay placement unit 406A. These difference are described further herein below, especially with reference to FIGS. 10 and 11. In brief, processing delay placement units 406A and 406B operate differently from one another, and processing delay placement unit 406B is more closely integrated with searcher 402 than is processing delay placement unit 406A. Otherwise, receiver 304B may operate similarly to receiver 304A.

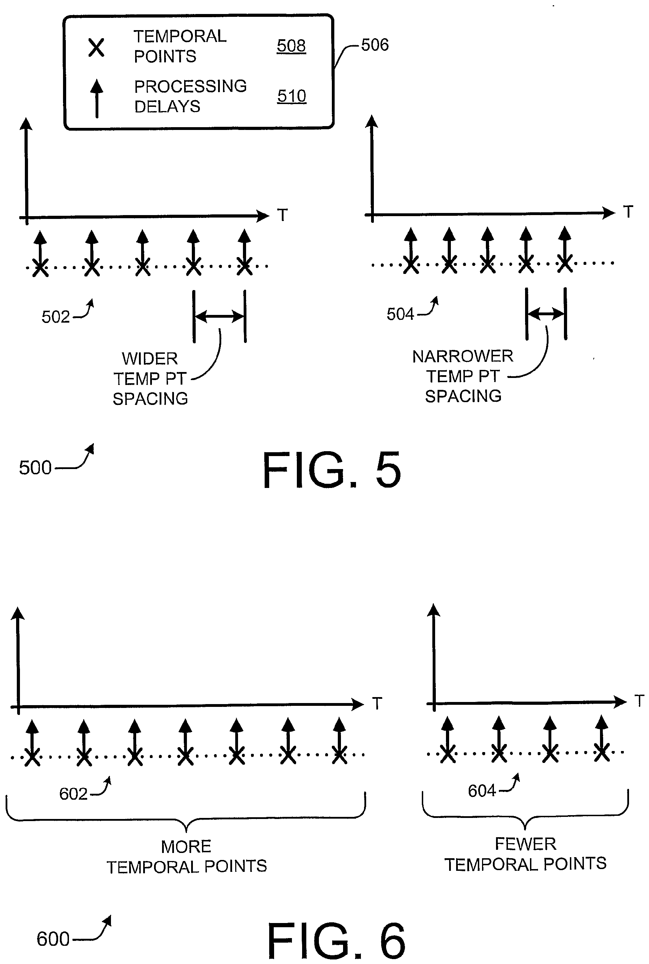

FIGS. 5, 6, and 7 illustrate different adjustments to the set of temporal points of a grid. These adjustments pertain to temporal point spacing, total number of temporal points in a set of temporal points, and location of the center of a set of temporal points, respectively. Although illustrated separately, the adjustment of these grid parameters may alternatively be performed in combination of two or three (or more) such grid parameters.

FIG. 5 depicts via graphs 500 an example of processing delay placement using a grid-oriented approach in which the spacing between temporal points is adjusted. As indicated by legend 506, each temporal point 508 is represented by an "X". Each processing delay 510 is represented by an upward-pointing arrow with an oblong triangular head. Processing delays 510 may be, for example, finger locations, filter tap positions, and so forth. For the graphs of each of FIGS. 5, 6, and 7, time (T) extends along the abscissa axis (the horizontal "x-axis").

As shown, graphs 500 include a grid 502 and a grid 504. The grids for each graph include five temporal points 508 with five corresponding processing delays 510. However, a grid may have a different number of temporal points. Grid 502 shows the temporal points with relatively wider grid spacing. Grid 504 shows the temporal points with relatively narrower grid spacing. Thus, the spacing between consecutive temporal points is greater for grid 502 than for grid 504.

FIG. 6 depicts via graphs 600 an example of processing delay placement using a grid-oriented approach in which the number of temporal points in a set of temporal points is adjusted. As shown, graphs 600 include a grid 602 and a grid 604. Grid 602 includes relatively more temporal points, and grid 604 includes relatively fewer temporal points. Thus, grid 602 has more temporal points than grid 604. Specifically, grid 602 is illustrated with seven temporal points 508, and grid 604 is illustrated with four temporal points 508. However, each grid may have a different total number of temporal points. As illustrated, each temporal point is assigned a corresponding processing delay.

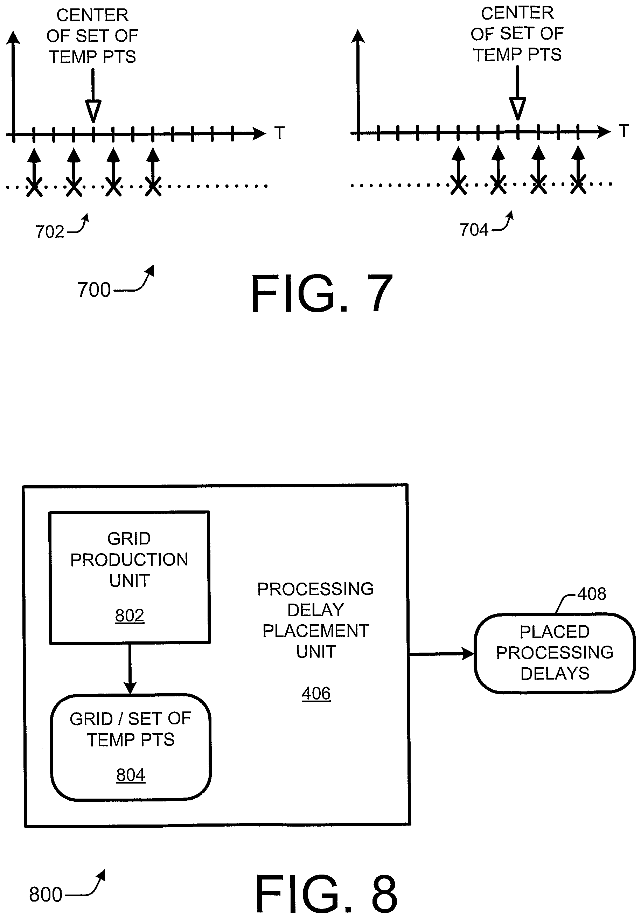

FIG. 7 depicts via graphs 700 an example of processing delay placement using a grid-oriented approach in which the center of a set of temporal points is adjusted. As shown, graphs 700 include a grid 702 and a grid 704. Each grid 702 and 704 has an equal number of temporal points that are spaced the same distance apart. However, the location of the grid center for grid 702 is different from the location of the grid center for grid 704.

As described above, wireless channels are often dispersive. They can be dispersive to a light, moderate, heavy, etc. degree. In an example embodiment, for a lightly dispersive channel, fewer processing delays are used, and grid spacing is relatively narrower. For a moderately to heavily dispersive channel, more processing delays are used, and grid spacing is relatively wider.

FIG. 8 is a block diagram 800 of an example processing delay placement unit 406 that includes a grid production unit 802 and that provides placements for processing delays 408. In an example embodiment, grid production unit 802 produces a grid (or set of temporal points) 804. Using temporal points (not shown in FIG. 8) of grid 804, processing delay placement unit 406 places processing delays and then outputs placed processing delays 408 (i.e., traffic processing delays 408 (of FIGS. 4A and 4B)). In an example implementation, processing delay placement unit 406 places one processing delay 510 on each temporal point 508 of the set of temporal points that form the grid to make the grid contiguous with no breaks.

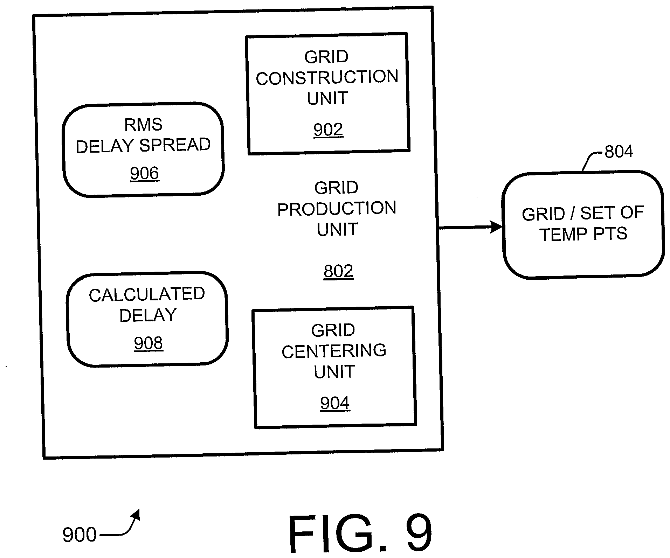

FIG. 9 is a block diagram 900 of an example grid production unit 802 that produces a grid (or set of temporal points) 804 using a grid construction unit 902 and/or a grid centering unit 904. In an example embodiment, grid production unit 802 ascertains an RMS delay spread 906. It also computes at least one calculated delay 908. Calculated delay 908 may be, for example, a center of gravity for multiple delays, a delay that is associated with a largest net channel coefficient magnitude, a delay that is associated with a largest PDP, some combination thereof, and so forth.

Grid construction unit 902 constructs a grid responsive to RMS delay spread 906. Grid centering unit 904 centers a grid responsive to calculated delay 908. In this manner, grid production unit 802 produces parameters for grid 804. Grid construction unit 902 and grid centering unit 904 are described in greater detail herein below with particular reference to FIG. 10 and FIG. 11, respectively.

FIG. 10 is a block diagram 1000 of an example grid construction unit 902 that operates responsive to RMS delay spread 906. In an example embodiment, in response to RMS delay spread 906, grid construction unit 902 establishes temporal point spacing 1002 and/or sets a number of temporal points 1004. Grid production unit 802 and/or grid construction unit 902 may smooth RMS delay spread 906 to determine a smoothed RMS delay spread 906. The smoothing may be performed using any smoothing technique. By way of example, RMS delay spread smoothing may be performed by filtering the RMS delay spread. Filtering may be implemented using a linear approach (e.g., Finite Impulse Response (FIR) or Infinite Impulse Response (IIR) filtering), a non-linear approach (e.g., median filtering), some combination thereof, and so forth. When smoothed, grid construction unit 902 constructs a grid responsive to the smoothed RMS delay spread 906.

When implemented in conjunction with processing delay placement unit 406A (of FIG. 4A), grid production unit 802 (of FIGS. 8 and 9) and grid construction unit 902 operate using estimated net channel coefficients. When implemented in conjunction with processing delay placement unit 406B (of FIG. 4B), grid production unit 802 and grid construction unit 902 operate using PDPs. These two example implementations are described below.

For an example implementation in which processing delay placement unit 406A is substantially separate from searcher 402 (as illustrated by FIG. 4A), grid production unit 802 ascertains RMS delay spread 906 as shown in equation (1):

$$P = \hat{\mathbf{h}}^H \hat{\mathbf{h}}$$

$$\tau_{COG} = \frac{1}{P} \sum_{k=0}^{L-1} \left| \hat{h}_k \right|^2 \hat{\tau}_k \qquad , \qquad\qquad\qquad (1)$$

$$\tau_{RMS} = \sqrt{\frac{1}{P} \sum_{k=0}^{L-1} \left| \hat{h}_k \right|^2 \hat{\tau}_k^2 - \tau_{COG}^2}$$

where $\hat{\mathbf{h}} = [\hat{h}_1, \hat{h}_2, ..., \hat{h}_{L-1}]^T$ is a vector of estimated net channel coefficients for the delays reported by the delay searcher, $\hat{\tau}_j$ is the $j^{th}$ estimated path delay, and $L$ is the number of estimated paths. The estimated net channel coefficients include the effects of transmit and receive filters as well as the effects that are represented by the radio channel coefficients. The variable $\tau_{COG}$ represents the center of gravity (COG) of the path delays, and the variable $\tau_{RMS}$ is the RMS delay spread.

Given the RMS delay spread $\tau_{RMS}$, grid construction unit 902 establishes temporal point spacing 1002 as follows:

$\tau_{RMS} \geq \psi_{thresh} \rightarrow$ the temporal points are established to be *spacing1* apart; or

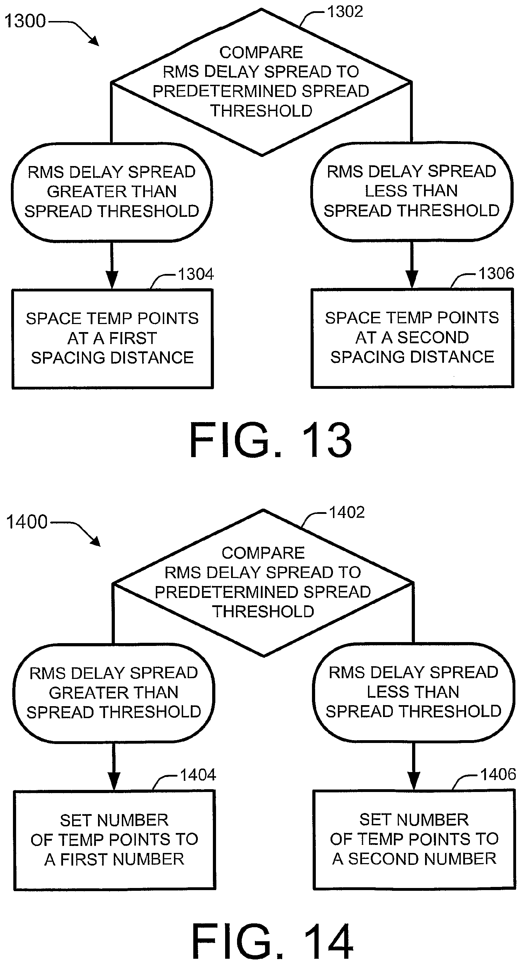

$\tau_{RMS} < \psi_{thresh} \rightarrow$ the temporal points are established to be *spacing2* apart,

where $\psi_{thresh}$ is a predetermined spread threshold. By way of example, the first spacing distance (i.e., *spacing1*) may be chip spaced. The second spacing distance (i.e., *spacing2)* may be sub-chip spaced. The predetermined spread threshold $\psi_{thresh}$ is to separate lightly dispersive channels from heavily (or moderately) dispersive channels. It may be determined, for example, experimentally by: computing the RMS delay spread over different lightly to heavily dispersive environments, plotting the results in a histogram, and selecting a threshold to separate the lightly dispersive environments from the heavily dispersive ones. Although only a single predetermined spread threshold $\psi_{thresh}$ is used in the example above, more than one threshold may alternatively be implemented. Multi-threshold examples are provided herein below with particular reference to FIGS. 13 and 14.

Given the RMS delay spread $\tau_{RMS}$, grid construction unit 902 sets the number of temporal points 1004 for a grid (or set of temporal points) as follows:

$\tau_{RMS} \geq \psi_{thresh} \rightarrow$ the grid is set to have $N_1$ temporal points; or
$\tau_{RMS} < \psi_{thresh} \rightarrow$ the grid is set to have $N_2$ temporal points,

where $\psi_{thresh}$ is the predetermined spread threshold. By way of example only, the value of the first number, $N_1$, may be greater than the value of the second number, $N_2$, ($N_1 > N_2$). In an example implementation, the first number $N_1$ equals a maximum number of processing delays that are available to a receiver given a level of hardware capabilities. When fewer processing delays can be utilized while still achieving a targeted level of performance (e.g., in a lightly dispersive channel), resource usage efficiency can be improved. The second number $N_2$ depends on receiver implementation and may be determined experimentally. Although only a single predetermined spread threshold $\psi_{thresh}$ is used in the example above, more than one threshold may alternatively be implemented.

For an example implementation in which processing delay placement unit 406A is substantially integrated with searcher 402 (as illustrated by FIG. 4B), grid production unit 802 ascertains RMS delay spread 906 as shown in equation (2):

$$P = \sum_{k=0}^{N_p} PDP_k$$

$$\tau_{COG} = \frac{1}{P} \sum_{k=0}^{N_p-1} PDP_k \hat{\tau}_k \qquad , \qquad (2)$$

$$\tau_{RMS} = \sqrt{\frac{1}{P} \sum_{k=0}^{N_p-1} PDP_k \hat{\tau}_k^2 - \tau_{COG}^2}$$

where P represents power, $PDP_k$ is the $k^{th}$ sample of the PDP, $\hat{\tau}_k$ is the delay associated with the $k^{th}$ PDP sample, and $N_p$ is the number of PDP samples. The variable $\tau_{COG}$ represents the COG of the delays, and the variable $\tau_{RMS}$ is the RMS delay spread.

Given the RMS delay spread $\tau_{RMS}$, grid construction unit 902 establishes temporal point spacing 1002 as follows:

$\tau_{RMS} \geq \psi_{thresh} \rightarrow$ the temporal points are established to be *spacing1* apart; or
$\tau_{RMS} < \psi_{thresh} \rightarrow$ the temporal points are established to be *spacing2* apart,

where $\psi_{thresh}$ is a predetermined spread threshold. By way of example, the first spacing distance (i.e., *spacing1*) may be chip spaced. The second spacing distance (i.e., *spacing2)* may be sub-chip spaced. Although only a single predetermined spread threshold $\psi_{thresh}$ is used in the example above, more than one threshold may alternatively be implemented.

Given the RMS delay spread $\tau_{RMS}$, grid construction unit 902 sets the number of temporal points 1004 for a grid (or set of temporal points) as follows:

$\tau_{RMS} \geq \psi_{thresh} \rightarrow$ the grid is set to have $N_1$ temporal points; or
$\tau_{RMS} < \psi_{thresh} \rightarrow$ the grid is set to have $N_2$ temporal points,

where $\psi_{thresh}$ is the predetermined spread threshold. By way of example, the value of the first number $N_1$ is greater than the value of the second number $N_2$ ($N_1 > N_2$). Although only a single predetermined spread threshold $\psi_{thresh}$ is used in

the example above, more than one threshold may alternatively be implemented.

FIG. 11 is a block diagram 1100 of an example grid centering unit 904 that operates responsive to a calculated delay 908. In an example embodiment, in response to at least one calculated delay 908, grid centering unit 904 determines grid center location 1102 (or center of a set of temporal points 1102). By appropriately centering a grid, the grid (or set of temporal points) can be created or shifted in units that are less than chip-sized. For example, a grid can be shifted a ¼ chip distance.

When implemented in conjunction with processing delay placement unit 406A (of FIG.4A), grid production unit 802 (of FIGS. 8 and 9) and grid centering unit 904 operate using estimated net channel coefficients. When implemented in conjunction with processing delay placement unit 406B (of FIG. 4B), grid production unit 802 and grid centering unit 904 operate using PDPs. These two implementations are described below.

With the grid spacing determined, for an example implementation in which processing delay placement unit 406A is substantially separate from searcher 402 (as illustrated by FIG. 4A), grid centering unit 904 centers a grid (or a set of temporal points) on:

$\hat{\tau}_{COG}$; or

$\hat{\tau}_j$ associated with the largest of $|\hat{h}_j|^2$.

In other words, the location 1102 of the center of the grid may be established responsive to at least one calculated delay. The calculated delay may be, for instance, (i) a center of gravity for the path delays or (ii) a path delay that is associated with a largest net channel coefficient magnitude. The centering may also be performed based on an offset from the calculated delay (e.g., based on a fixed offset from $\tau_{COG}$ or a selected $\hat{\tau}_j$).

With the grid spacing determined, for an example implementation in which processing delay placement unit 406B is substantially integrated with searcher 402 (as illustrated by FIG. 4B), grid centering unit 904 centers a grid (or a set of temporal points) on:

$\tau_{COG}$; or

$\hat{\tau}_k$ associated with the largest of $PDP_k$.

In other words, the location 1102 of the center of the grid may be established responsive to at least one calculated delay. The calculated delay may be, for instance, (i) a center of gravity for path delays or (ii) a path delay that is associated with a largest PDP. The centering may also be performed based on an offset from the calculated delay (e.g., based on a fixed offset from $\tau_{COG}$ or a selected $\hat{\tau}_k$).

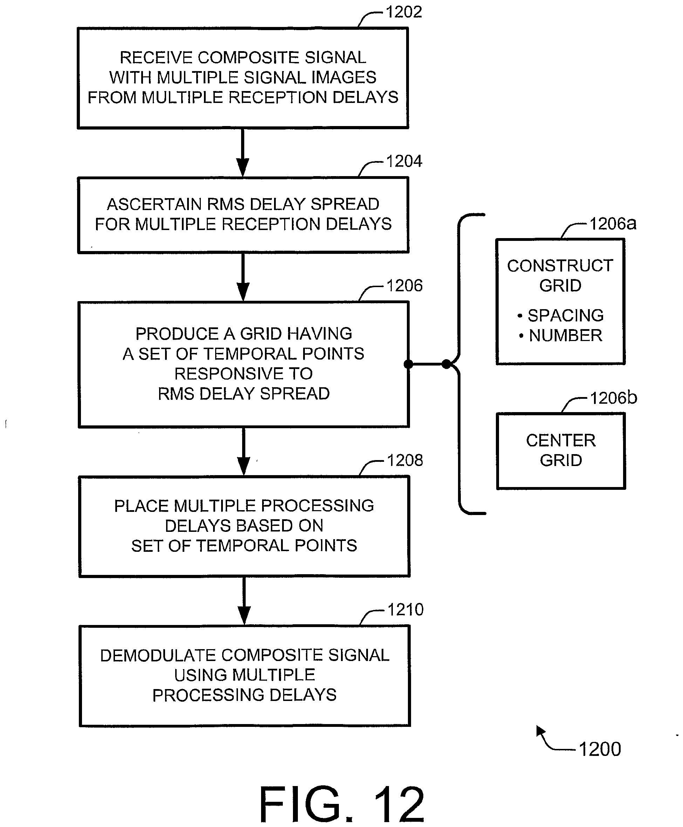

FIG. 12 is a flow diagram 1200 of an example general method for signal reception with adjustable processing delay placement. As illustrated, flow diagram 1200 includes seven blocks 1202-1210, 1206a, and 1206b. Flow diagram 1200 may be implemented by a communication node or device, such as a receiving device 204 (of FIGS. 2 and 3). The steps of flow diagram 1200, as well as those of the other flow diagrams that are described herein, may be effectuated with processor-executable instructions. Processor-executable instructions may be embodied as hardware, firmware, software, fixed logic circuitry, combinations thereof, and so forth. Example operational implementations of processor-executable instructions include, but are not limited to, a memory coupled to a processor, an application-specific integrated circuit (ASIC), a digital signal processor and associated code, some combination thereof, and so forth.

In an example embodiment, flow diagram 1200 depicts a method for a receiving device to dynamically adjust the parameter(s) of a grid having temporal points that are to be used for placing processing delays. The placed processing delays are then used to demodulate a signal. Although particular example elements from other FIGS. are referenced to describe the steps of FIG. 12, the steps may alternatively be performed with other elements.

At block 1202, a composite signal having multiple signal images corresponding to multiple reception delays is received. For example, a receiver 304 may receive a composite signal 208 having multiple signal images 208a,208b... corresponding to multiple reception delays.

At block 1204, an RMS delay spread is ascertained for the multiple reception delays corresponding to the multiple signal images of the composite signal. For example, a production unit 802 may ascertain an RMS delay spread 906 for the multiple reception delays corresponding to the multiple signal images 208a,208b... of composite signal 208.

At block 1206, a grid formed by a set of temporal points is produced responsive to the RMS delay spread. For example, production unit 802 may produce or generate a grid (or set of temporal points) 804 having multiple temporal points 508 responsive to RMS delay spread 906. Although not shown in flow diagram 1200, the RMS delay spread may be smoothed to determine a smoothed RMS delay spread (e.g., smoothed using filtering). When smoothed, the smoothed RMS delay spread may be used to produce the grid having the multiple temporal points.

At block 1208, multiple processing delays are placed based on the set of temporal points. For example, processing delay placement unit 406 may place multiple processing delays 510 at the multiple temporal points 508 of grid 804.

At block 1210, the composite signal is demodulated using the multiple processing delays. For example, traffic combiner 410 may combining the multiple signal images 208a,208b... in accordance with the multiple processing delays 510 that are placed based on temporal points 508 of the set of temporal points to thereby demodulate composite signal 208.

As part of the grid production step of block 1206, a grid may be constructed at block 1206a and/or a grid may be centered at block 1206b. For instance, the step of producing may include constructing a grid (at block 1206a) by spacing the multiple temporal points responsive to the RMS delay spread and/or by determining a number of temporal points of a set of temporal points for the grid responsive to the RMS delay spread. It should be understood that the RMS delay spread may be smoothed for the production of the grid. Also, the step of producing may include centering the multiple temporal points of the grid (at block 1206b) responsive to at least one calculated delay. Example implementations for block 1206a are described below with particular reference to FIG. 13 (for spacing of temporal points) and FIG. 14 (for number of temporal points).

FIG. 13 is a flow diagram 1300 of an example grid construction method for establishing the grid spacing between temporal points of a grid. In an example embodiment, at block 1302, the RMS delay spread is compared to one or more predetermined spread thresholds. If the RMS delay spread is determined to be greater than (or equal to) the predetermined spread threshold, then at block 1304 the temporal points are spaced at a first spacing distance. On the other hand, if the RMS delay spread is determined to be less than the predetermined spread threshold, then at block 1306 the temporal points are spaced at a second spacing distance. As noted above, the first spacing distance (e.g., chip spaced) may be greater than the second spacing distance (e.g., sub-chip spaced).

FIG. 14 is a flow diagram 1400 of an example grid construction method for setting the number of temporal points for a grid. In an example embodiment, at block 1402, the RMS delay spread is compared to one or more predetermined spread thresholds. If the RMS delay spread is determined to be greater than (or equal to) the predetermined spread threshold, then at block 1404 the number of temporal points for the grid is set to a first number. On the other hand, if the RMS delay spread is determined to be less than the predetermined spread threshold, then at block 1406 the number of temporal points for the grid is set to a second number. As noted above, the value of the first number may be greater than the value of the second number.

Although the establishment of the temporal point spacing and the setting of the number of temporal points have been described herein above using a single predetermined spread threshold, they may alternatively be determined using two or more predetermined spread thresholds. For example, there can be one threshold for determining when a channel transitions from relatively low dispersion to relatively high dispersion (e.g., $\psi_{thresh\_low\_to\_high}$) and another threshold for determining when a channel transitions from relatively high to relatively low dispersion ($\psi_{thresh\_high\_to\_low}$). More specifically, multiple thresholds may be implemented in accordance with the following example in which separate thresholds function as a form of hysteresis to ensure that a channel that is borderline does not continuously toggle between low and high dispersion levels:

if (low_dispersion) AND ($\tau_{RMS} \geq \psi_{thresh\_low\_to\_high}$)
the temporal points are established *spacing1* apart with $N_1$ temporal points,
else if (high_dispersion) AND ($\tau_{RMS} < \psi_{thresh\_high\_to\_low}$)
the temporal points are established *spacing2* apart with $N_2$ temporal points,
else
temporal point spacing and number from previous grid placement are used.

As another example, the grid spacing and the number of temporal points may be determined as follows:

if ($\tau_{RMS} < \psi_{thresh\_1}$)

the temporal points are established *spacing1* apart with $N_1$ temporal points,

else if ($\psi_{thresh\_1} \leq \tau_{RMS} < \psi_{thresh\_2}$)

the temporal points are established *spacing2* apart with $N_2$ temporal points,

else

the temporal points are established *spacing3* apart with $N_3$ temporal points, where *spacing1 < spacing2 < spacing3* and $N_1 < N_2 < N_3$.

FIG. 15 is a block diagram 1500 of example devices 1502 that may be used to implement embodiments for adjusting a set of temporal points of a grid for the placement of processing delays when receiving a composite signal.

As illustrated, block diagram 1500 includes two devices 1502a and 1502b, human-device interface equipment 1512, and one or more networks 1516. As explicitly shown with device 1502a, each device 1502 may include at least one processor 1504, one or more memories 1506, one or more input/output interfaces 1508, and at least one interconnection 1514. Memory 1506 may include processor-executable instructions 1510. Network(s) 1516 may be, by way of example but not limitation, an internet, an intranet, an Ethernet, a public network, a private network, a cable network, a digital subscriber line (DSL) network, a telephone network, a wired network, a wireless network, some combination thereof, and so forth. Device 1502a and device 1502b may communicate over network(s) 1516.

For example embodiments, device 1502 may represent any processing-capable device. Processor 1504 may be implemented using any applicable processing-capable technology, and one may be realized as a general-purpose or a special-purpose processor. Examples include, but are not limited to, a central processing unit (CPU), a digital signal processor (DSP), a microprocessor, some combination thereof, and so forth. Memory 1506 may be any available memory that is included as part of and/or is accessible by device 1502. It includes volatile and non-volatile memory, removable and non-removable memory, hard-coded logic, combinations thereof, and so forth.

Interconnection 1514 interconnects the components of device 1502. Interconnection 1514 may be realized as a bus or other connection mechanism and may directly or indirectly interconnect various components. I/O interfaces 1508 may include (i) a network interface for monitoring and/or communicating across network 1516, (ii) a display device interface for displaying information on a display screen, (iii) one or more human-device interfaces, and so forth. Example network interfaces include, but are not limited to, a radio or transceiver (e.g., a transmitter and/or receiver), a modem, a network card, some combination thereof, and so forth. Human-device interface equipment 1512 may be integrated with or discrete from device 1502.

Generally, processor 1504 is capable of executing, performing, and/or otherwise effectuating processor-executable instructions, such as processor-executable instructions 1510. Memory 1506 is comprised of one or more processor-accessible memories. In other words, memory 1506 may include processor-executable instructions 1510 that are executable by processor 1504 to effectuate the performance of functions by device 1502. Processor-executable instructions 1510 may be embodied as software, firmware, hardware, fixed logic circuitry, some combination thereof, and so forth. Processor 1504 and processor-executable instructions 1510 of memory 1506 may be realized separately (e.g., as a DSP executing code) or integrated (e.g., as part of an application-specific integrated circuit (ASIC)).

In example implementations, one device 1502 may comprise a transmitting device 202, and another device 1502 may comprise a receiving device 204 (both of FIGS. 2 and 3). Processor-executable instructions 1510 may comprise, for example, the components and/or units of FIGS. 4A, 4B, and 8-11. When processor-executable instructions 1510 are executed by processor 1504, the functions that are described herein may be effectuated. Example functions include, but are not limited to, those that are illustrated by flow diagrams 1200, 1300, and 1400 (of FIGS. 12, 13, and 14, respectively), as well as those that are embodied by the other features that are described herein.

Different embodiment(s) of the invention can offer one or more advantages. Generally, an adaptive mechanism is implemented that responds to channel conditions to better utilize scarce processing delays (e.g., fingers, filter taps, etc.) of the receiver. More specifically, in certain embodiments a more dispersive channel uses a grid with a larger separation between temporal points (e.g., chip spaced separations) while a less dispersive channel uses a grid with a smaller separation between temporal points (e.g., sub-chip spaced separations). This switching mechanism can improve performance given a finite number of receiver processing delays.

As another advantage, in certain embodiments, receiver performance can be enhanced by adaptively allocating processing delays. Less dispersive channels utilize fewer processing delays while more dispersive channels utilize more processing delays, so the number of temporal points is adjusted. Simulations have indicated that this strategy can enhance receiver performance. Additionally, for at least some embodiments, the overhead associated with conventional path-based approaches can be reduced. Because the COG and/or the strongest path typically change relatively slowly over time, the receiver can reposition the temporal points of the grid, as well as the corresponding processing delays, less frequently.

The devices, features, functions, methods, steps, schemes, data structures, procedures, components, etc. of FIGS. 2-15 are illustrated in diagrams that are divided into multiple blocks and other elements. However, the order, interconnections, interrelationships, layout, etc. in which FIGS. 2-15 are described and/or shown are not intended to be construed as limiting, for any number of the blocks and/or other elements may be modified, combined, rearranged, augmented, omitted, etc. in any manner to implement one or more systems, methods, devices, memory, apparatuses, arrangements, etc. for adjusting a set of temporal points of a grid to facilitate processing delay placement.

Although multiple embodiments of the present invention have been illustrated in the accompanying Drawings and described in the foregoing Detailed Description, it should be understood that the invention is not limited to the disclosed embodiments, for it is also capable of numerous rearrangements, modifications and substitutions without departing from the scope of the invention as set forth and defined by the following claims.

**EP 2 412 105 B1**

**Claims**

1. A method for receiving a composite signal with adjustable processing delay placement, the method comprising steps of:

    receiving (1202) a composite signal having multiple signal images corresponding to multiple reception delays; ascertaining (1204) a root-mean-square delay spread for the multiple reception delays corresponding to the multiple signal images of the composite signal; and
    producing (1206) a grid having a set of temporal points responsive to the root-mean-square delay spread; and placing (1208) multiple processing delays based on the set of temporal points **characterized in, that** the step of producing a set of temporal points comprises a combination of:

    adjusting a spacing of the set of temporal points,
    adjusting a number of temporal points in the set of temporal points, and
    adjusting the center of the set of temporal points.

2. The method as recited in claim 1, further comprising the step of demodulating (1210) the composite signal by combining the multiple signal images in accordance with the multiple processing delays that are placed based on the set of temporal points.

3. The method as recited in claim 1, wherein the step of spacing comprises the steps of:

    comparing the root-mean-square delay spread to one or more predetermined spread thresholds;
    if the root-mean-square delay spread is greater than the one or more predetermined spread thresholds, adjusting the spacing of the set of temporal points by spacing the set of temporal points at a first spacing distance; and
    if the root-mean-square delay spread is less than the one or more predetermined spread thresholds, adjusting the spacing of the set of temporal points by spacing the set of temporal points at a second spacing distance;

    wherein the first spacing distance is greater than the second spacing distance.

4. The method as recited in claim 3, wherein the first spacing distance is approximately chip spaced or greater, and the second spacing distance is sub-chip spaced.

5. A device for receiving a composite signal with adjustable processing delay placement, the device comprising:

    a receiver (304A; 304B) configured to receive a composite signal having multiple signal images corresponding to multiple reception delays;
    a production unit configured to ascertain a root-mean-square delay spread for the multiple reception delays corresponding to the multiple signal images of the composite signal, the production unit being configured to generate grid having a set of temporal points responsive to the root-mean-square delay spread; and,
    a processing delay placement unit (406A; 406B) to place multiple processing delays based on the set of temporal points

    **characterized in, that** the production unit is configured to generate the set of temporal points by a combination of:

    adjusting a spacing of the set of temporal points,
    adjusting a number of temporal points in the set of temporal points, and
    adjusting the center of the set of temporal points.

6. The device as recited in claim 5, further comprising a traffic combiner (410) to combine the multiple signal images in accordance with the multiple processing delays that are placed based on the set of temporal points to demodulate the composite signal.

7. The device as recited in claim 5 or 6, wherein the production unit is to smooth the root-mean-square delay spread to determine a smoothed root-mean-square delay spread; and wherein the production unit is to generate the set of temporal points responsive to the smoothed root-mean-square delay spread.

8. The device as recited in claim 5 to 8, wherein the production unit includes a grid construction unit to space the set of temporal points responsive to the root-mean-square delay spread.

**Patentansprüche**

**1.** Verfahren zum Empfangen eines zusammengesetzten Signals mit einstellbarer Verarbeitungsverzögerungsanordnung, wobei das Verfahren die folgenden Schritte umfasst:

Empfangen (1202) eines zusammengesetzten Signals, das mehrere Signalbilder aufweist, die mehreren Empfangsverzögerungen entsprechen;
Ermitteln (1204) einer mittleren quadratischen Verzögerungsstreuung für die mehreren Empfangsverzögerungen, die den mehreren Signalbildern des zusammengesetzten Signals entsprechen; und
Erzeugen (1206) eines Gitters, das einen Satz von zeitlichen Punkten in Reaktion auf die mittlere quadratische Verzögerungsstreuung aufweist;
Platzieren (1208) mehrerer Verarbeitungsverzögerungen basierend auf dem Satz von zeitlichen Punkten, **dadurch gekennzeichnet, dass** der Schritt des Erzeugens eines Satzes von zeitlichen Punkten eine Kombination von:

Einstellen eines Abstands des Satzes von zeitlichen Punkten,
Einstellen einer Anzahl von zeitlichen Punkten in dem Satz von zeitlichen Punkten, und
Einstellen der Mitte des Satzes von zeitlichen Punkten umfasst.

**2.** Verfahren nach Anspruch 1, das ferner den Schritt des Demodulierens (1210) des zusammengesetzten Signals durch Kombinieren der mehreren Signalbilder gemäß den mehreren Verarbeitungsverzögerungen umfasst, die basierend auf dem Satz von zeitlichen Punkten platziert werden.

**3.** Verfahren nach Anspruch 1, wobei der Schritt des Beabstandens die folgenden Schritte umfasst:

Vergleichen der mittleren quadratischen Verzögerungsstreuung mit einem oder mehreren vorbestimmten Spreizschwellenwerten;
wenn die mittlere quadratische Verzögerungsstreuung größer als der eine oder die mehreren vorbestimmten Spreizschwellenwerte ist, Einstellen des Abstands des Satzes von zeitlichen Punkten durch Beabstanden des Satzes von zeitlichen Punkten in einem ersten Abstandsabstand; und
wenn die mittlere quadratische Verzögerungsstreuung kleiner als die eine oder die mehreren vorbestimmten Spreizschwellen ist, Einstellen des Abstands des Satzes von zeitlichen Punkten durch Beabstanden des Satzes von zeitlichen Punkten mit einem zweiten Abstandsabstand;
wobei der erste Beabstandungsabstand größer als der zweite Beabstandungsabstand ist.

**4.** Verfahren nach Anspruch 3, wobei der erste Beabstandungsabstand ungefähr chip-beabstandet oder größer ist und der zweite Beabstandungsabstand sub-chip-beabstandet ist.

**5.** Vorrichtung zum Empfangen eines zusammengesetzten Signals mit einstellbarer Verarbeitungsverzögerungsanordnung, wobei die Vorrichtung Folgendes aufweist:

einen Empfänger (304A; 304B), der konfiguriert ist, um ein zusammengesetztes Signal zu empfangen, das mehrere Signalbilder aufweist, die mehreren Empfangsverzögerungen entsprechen;
eine Produktionseinheit, die konfiguriert ist, um eine mittlere quadratische Verzögerungsstreuung für die mehreren Empfangsverzögerungen entsprechend den mehreren Signalbildern des zusammengesetzten Signals zu ermitteln, wobei die Produktionseinheit konfiguriert ist, ein Raster mit einem Satz von zeitlichen Punkten ansprechend auf die mittlere quadratische Verzögerungsstreuung zu erzeugen;
eine Verarbeitungsverzögerungsanordnungseinheit (406A; 406B), um mehrere Verarbeitungsverzögerungen basierend auf dem Satz von Zeitpunkten zu platzieren;
**dadurch gekennzeichnet, dass** die Erzeugungseinheit konfiguriert ist, um den Satz von zeitlichen Punkten durch eine Kombination von:

Einstellen eines Abstands des Satzes von zeitlichen Punkten,
Einstellen einer Anzahl von zeitlichen Punkten in dem Satz von zeitlichen Punkten, und
Einstellen der Mitte des Satzes von zeitlichen Punkten zu erzeugen.

**6.** Vorrichtung nach Anspruch 5, die ferner einen Verkehrskombinierer (410) umfasst, um die mehreren Signalbilder gemäß den mehreren Verarbeitungsverzögerungen zu kombinieren, die basierend auf dem Satz von zeitlichen Punkten platziert werden, um das zusammengesetzte Signal zu demodulieren.

**7.** Vorrichtung nach Anspruch 5 oder 6, wobei die Produktionseinheit dazu dient, die mittlere quadratische Verzögerungsstreuung zu glätten, um eine geglättete mittlere quadratische Verzögerungsstreuung zu bestimmen;

**8.** Vorrichtung nach Anspruch 5 bis 8, wobei die Produktionseinheit eine Gitterkonstruktionseinheit zum Platzieren des Satzes von zeitlichen Punkten als Reaktion auf die quadratische Verzögerungsstreuung umfasst.


**Revendications**

**1.** Procédé pour recevoir un signal composite avec mise en place de retard de traitement réglable, le procédé comprenant les étapes consistant à :

   recevoir (1202) un signal composite ayant plusieurs images de signal correspondant à plusieurs retards de réception ;
   déterminer (1204) une moyenne quadratique d'étalement de retard pour les multiples retards de réception correspondant aux multiples images de signal du signal composite ; et
   produire (1206) une grille ayant un ensemble de points temporels en réponse à la moyenne quadratique d'étalement de retard ; et
   mettre en place (1208) plusieurs retards de traitement sur la base de l'ensemble de points temporels **caractérisé en ce que** l'étape de production d'un ensemble de points temporels comprend une combinaison de :

      ajustement d'un espacement de l'ensemble de points temporels,
      ajustement d'un certain nombre de points temporels dans l'ensemble de points temporels, et
      ajustement du centre de l'ensemble de points temporels.

**2.** Procédé selon la revendication 1, comprenant en outre l'étape de démodulation (1210) du signal composite en combinant les multiples images de signal conformément aux multiples retards de traitement qui sont placés sur la base de l'ensemble de points temporels.

**3.** Procédé selon la revendication 1, dans lequel l'étape d'espacement comprend les étapes consistant à :

   comparer la moyenne quadratique d'étalement de retard à un ou plusieurs seuils d'étalement prédéterminés ;
   si la moyenne quadratique d'étalement de retard est supérieure au(x) seuil(s) d'étalement prédéterminé(s), ajuster l'espacement de l'ensemble de points temporels en espaçant l'ensemble de points temporels à une première distance d'espacement ; et
   si la moyenne quadratique d'étalement de retard est inférieure au(x) seuil(s) d'étalement prédéterminé(s), ajuster l'espacement de l'ensemble de points temporels en espaçant l'ensemble de points temporels à une deuxième distance d'espacement ;
   dans lequel la première distance d'espacement est supérieure à la deuxième distance d'espacement.

**4.** Procédé selon la revendication 3, dans lequel la première distance d'espacement est approximativement à un espacement de puce ou plus, et la deuxième distance d'espacement est à un espacement inférieur à un espacement de puce.

**5.** Dispositif pour recevoir un signal composite avec mise en place de retard de traitement réglable, le dispositif comprenant :

   un récepteur (304A ; 304B) configuré pour recevoir un signal composite ayant plusieurs images de signal correspondant à plusieurs retards de réception ;
   une unité de production configurée pour déterminer une moyenne quadratique d'étalement de retard pour les multiples retards de réception correspondant aux multiples images de signal du signal composite, l'unité de production étant configurée pour générer une grille ayant un ensemble de points temporels en réponse à la moyenne quadratique d'étalement de retard ; et,
   une unité de mise en place de retard de traitement (406A ;

406B) pour placer plusieurs retards de traitement sur la base de l'ensemble de points temporels **caractérisé en ce que** l'unité de production est configurée pour générer l'ensemble de points temporels par une combinaison de :

ajustement d'un espacement de l'ensemble de points temporels,
ajustement d'un certain nombre de points temporels dans l'ensemble de points temporels, et
ajustement du centre de l'ensemble de points temporels.

6. Dispositif selon la revendication 5, comprenant en outre un combinateur de trafic (410) pour combiner les multiples images de signal conformément aux multiples retards de traitement qui sont placés sur la base de l'ensemble de points temporels pour démoduler le signal composite.

7. Dispositif selon la revendication 5 ou 6, dans lequel l'unité de production sert à lisser la moyenne quadratique d'étalement de retard pour déterminer une moyenne quadratique d'étalement de retard lissée ; et dans lequel l'unité de production sert à générer l'ensemble de points temporels en réponse à la moyenne quadratique d'étalement de retard lissée.

8. Dispositif selon la revendication 5 à 8, dans lequel l'unité de production inclut une unité de construction de grille pour espacer l'ensemble de points temporels en réponse à la moyenne quadratique d'étalement de retard.

**FIG. 1**

*PRIOR ART*

**FIG. 2**

RECEIVING
DEVICE

204MS

RECEIVER

304

208b

REFLECTING
STRUCTURE

302

208a

208b

TRANS-
MITTING
DEVICE

202RBS

300

# FIG. 3

FIG. 4A

FIG. 4B

**FIG. 5**

500

**FIG. 6**

600

CENTER
OF SET OF
TEMP PTS

T

702

CENTER
OF SET OF
TEMP PTS

T

704

700

# FIG. 7

GRID
PRODUCTION
UNIT

802

PROCESSING
DELAY
PLACEMENT
UNIT

406

408

PLACED
PROCESSING
DELAYS

GRID / SET OF
TEMP PTS

804

800

# FIG. 8

FIG. 9

900

RMS
DELAY SPREAD
906

GRID
CONSTRUCTION
UNIT

902

TEMP POINT
SPACING
1002

NUMBER OF
TEMP POINTS
1004

1000

# FIG. 10

CALCULATED
DELAY
908

GRID
CENTERING
UNIT

904

GRID CENTER
LOCATION
(CENTER OF
SET OF TEMP
POINTS)
1102

1100

# FIG. 11

```
                                    ┌─1202
        ┌──────────────────────────────┐
        │       RECEIVE COMPOSITE SIGNAL │
        │      WITH MULTIPLE SIGNAL IMAGES│
        │   FROM MULTIPLE RECEPTION DELAYS│
        └──────────────────────────────┘
                      │
                      ▼              ┌─1204
        ┌──────────────────────────────┐
        │     ASCERTAIN RMS DELAY SPREAD │
        │    FOR MULTIPLE RECEPTION DELAYS│
        └──────────────────────────────┘
                      │
                      ▼              ┌─1206
        ┌──────────────────────────────┐
        │      PRODUCE A GRID HAVING     │
        │    A SET OF TEMPORAL POINTS    │
        │         RESPONSIVE TO          │
        │       RMS DELAY SPREAD         │
        └──────────────────────────────┘
                      │
                      ▼              ┌─1208
        ┌──────────────────────────────┐
        │     PLACE MULTIPLE PROCESSING  │
        │         DELAYS BASED ON        │
        │      SET OF TEMPORAL POINTS    │
        └──────────────────────────────┘
                      │
                      ▼              ┌─1210
        ┌──────────────────────────────┐
        │   DEMODULATE COMPOSITE SIGNAL  │
        │         USING MULTIPLE         │
        │       PROCESSING DELAYS        │
        └──────────────────────────────┘
```

1206a

CONSTRUCT
GRID

• SPACING
• NUMBER

1206b

CENTER
GRID

1200

# FIG. 12

1300 ⟶

COMPARE
RMS DELAY SPREAD TO
PREDETERMINED SPREAD
THRESHOLD ⟍1302

RMS DELAY SPREAD
GREATER THAN
SPREAD THRESHOLD

RMS DELAY SPREAD
LESS THAN
SPREAD THRESHOLD

⟍1304

SPACE TEMP POINTS
AT A FIRST
SPACING DISTANCE

⟍1306

SPACE TEMP POINTS
AT A SECOND
SPACING DISTANCE

# FIG. 13

1400 ⟶

COMPARE
RMS DELAY SPREAD TO
PREDETERMINED SPREAD
THRESHOLD ⟍1402

RMS DELAY SPREAD
GREATER THAN
SPREAD THRESHOLD

RMS DELAY SPREAD
LESS THAN
SPREAD THRESHOLD

⟍1404

SET NUMBER
OF TEMP POINTS TO
A FIRST NUMBER

⟍1406

SET NUMBER
OF TEMP POINTS TO
A SECOND NUMBER

# FIG. 14

DEVICE    <u>1502a</u>

└1514

PROCESSOR(S)

<u>1504</u>

MEMORY

<u>1506</u>

PROCESSOR-
EXECUTABLE
INSTRS.

<u>1510</u>

INPUT/OUTPUT
INTERFACES

<u>1508</u>

HUMAN-DEVICE
INTERFACE
EQUIPMENT

<u>1512</u>

NETWORK(S)

<u>1516</u>

DEVICE

<u>1502b</u>

1500

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6922434 B
- US 7469024 B

- US 20060029164 A1